**Europäisches Patentamt**

**European Patent Office**

**Office européen des brevets**

(19)

(11) Veröffentlichungsnummer: **0 165 894**

**B1**

(12)

# EUROPÄISCHE PATENTSCHRIFT

(45) Veröffentlichungstag der Patentschrift:
02.11.88

(51) Int. Cl.⁴: **F 03 D 7/02**

(21) Anmeldenummer: **85810135.5**

(22) Anmeldetag: **26.03.85**

(54) **Generator mit Windradantrieb.**

(30) Priorität: **26.03.84 CH 1514/84**

(43) Veröffentlichungstag der Anmeldung:
**27.12.85 Patentblatt 85/52**

(45) Bekanntmachung des Hinweises auf die Patenterteilung:
**02.11.88 Patentblatt 88/44**

(84) Benannte Vertragsstaaten:
**CH DE FR GB IT LI NL**

(56) Entgegenhaltungen:
**WO-A-80/02056**
**DE-A-3 130 257**
**DE-B-1 118 110**
**DE-C-167 960**
**FR-A-1 013 456**
**NL-C-51 479**
**US-A-2 533 785**
**US-A-4 348 154**
**US-A-4 426 192**
**US-A-4 427 897**

(73) Patentinhaber: **Jurisch, Alfred, Dr.- Born- Strasse 17, D-3590 Bad Wildungen (DE)**

(72) Erfinder: **Jurisch, Alfred, Dr.- Born- Strasse 17, D-3590 Bad Wildungen (DE)**

EP 0 165 894 B1

## Beschreibung

Die Erfindung bezieht sich auf einen Generator mit Windradantrieb, bei welchem die Windradflügel gemeinsam und kontinuierlich zusammenklappbar und spreizbar sind.

Derartige Generatoren sind z. B. aus der DE-C-13 901 (21.11.1881) und aus der DE-A-3 130 257 (31.7.1981) bekannt.

Gegenstand der Erfindung ist ein derartiger Generator der sich insbesondere für Segelschiffe eignet. Auf einem Segelschiff gehört ein solcher Generator in den Masttop. Für die Montage an jener Stelle muß aber sein Gewicht gering sein. Der unterschiedlichen Schräglagen des Schiffs wegen soll dazu das Windrad immer die optimale Lage gegenüber der Windrichtung einnehmen. Einen Sturm muß es auch unbeschadet überstehen, und zwar ohne Ersatzsegelfläche. Bei Schwachwind hingegen soll es dennoch Energiedeckung sichern. Trotz der Meerwasserumgebung muß schließlich der Generator möglichst überwachungsfrei arbeiten.

Die bekannten Generatoren mit Windradantrieb sind für die Montage im Masttop nicht geeignet. Die Erfindung soll diesen Mangel beheben.

Der in Anspruch 1 umschriebene Generator erfüllt die eingangs ausgeführten Forderungen. Außerdem sorgt die Schnecke für eine sichere Festlegung der Windradflügel in der jeweils eingestellte Lage und sie schützt zugleich deren Betätigungsmittel vor Böen. Die Windradflügel verharren auch in der eingestellten Lage ohne weitere Energiezufuhr zum Motor.

Die besonderen Ausführungsformen nach Ansprüchen 2 und 3 haben den Vorteil, daß eine kompakte und raumsparende Bauweise gewährleistet ist.

Die in Anspruch 4 umschriebene Vorrichtung bietet eine besonders sichere Steuerung der Windradflügel dar.

Trotz der relativ kleinen Drehzahl und Gewicht des Generators gewährleisten seine in Anspruch 5 vorgesehenen Merkmale eine hohe elektrische Leistung. Darüber hinaus ergibt sich aus dem Fehlen von dauerhaft belasteten Schleifkontakten eine gute Meerwassertauglichkeit sowie eine hohe Lebensdauer.

Anspruch 6 verhindert ein ungewolltes Kippen des Generators, wenn ein Windradflügel hinter einem Segel vorbeiläuft.

Die in Anspruch 7 umschriebene, quasi kardanische Aufhängung des Generators bewerkstelligt die in Anspruch 1 umschriebene Aufhängung auf eine besonders einfache Art.

Die Merkmale von Anspruch 8 haben den Vorteil, eine Information zu liefern, die beispielsweise einem im normalen Blickfeld des Skippers angeordneten Windrichtungsanzeiger zugeleitet werden kann und/oder eine Windsteueranlage zu realisieren ermöglicht.

Ein Ausführungsbeispiel des erfindungsgemäßen Generators ist in der Zeichnung schematisch dargestellt und zwar zeigt:

Fig. 1    eine allgemeine Ansicht dieses Beispiels;

Fig. 2    einen Schnitt eines Teils von Fig. 1 längs Linie II - II von Fig. 3 in größerem Maßstab und mit abgebrochenen Flügeln;

Fig. 3    eine Seitenansicht von rechts von Fig. 2 bei abgenommener Schalenhälfte und mit einer abgebrochenen Brücke;

Fig. 4    einen Axialschnitt in größerem Maßstab eines anderen Teils von Fig. 1;

Fig. 5    eine Draufsicht eines Teils von Fig. 4;

Fig. 6    ein Blockschema der Elektronik für die selbsttätige Einstellung der Windradflügel, und

Fig. 7    ein Blockschema des Stromkreises für die Energieaufspeicherung.

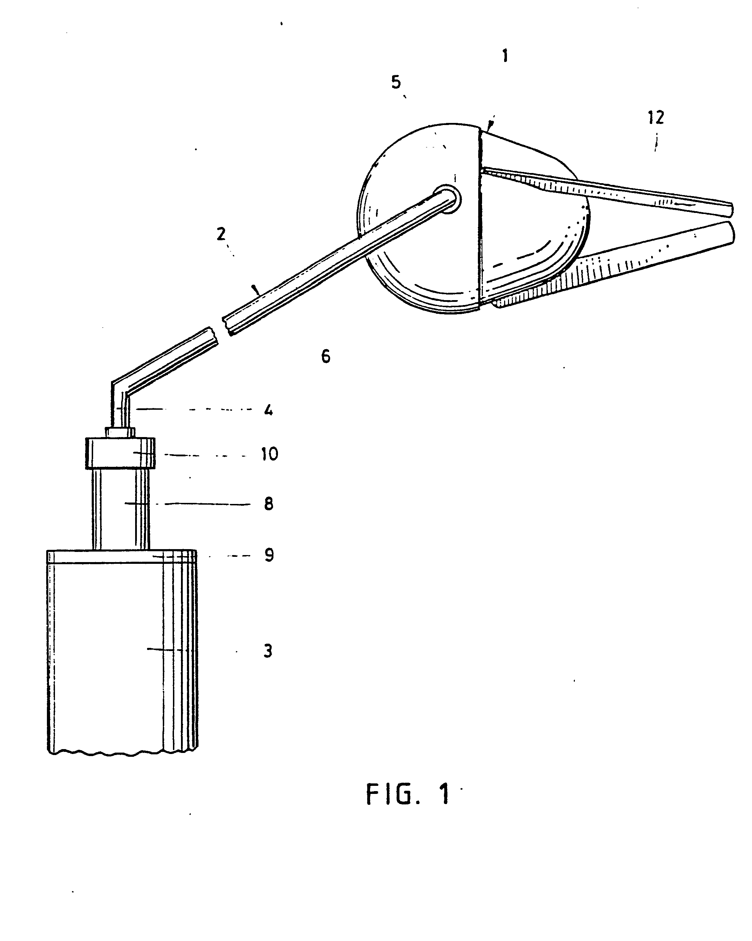

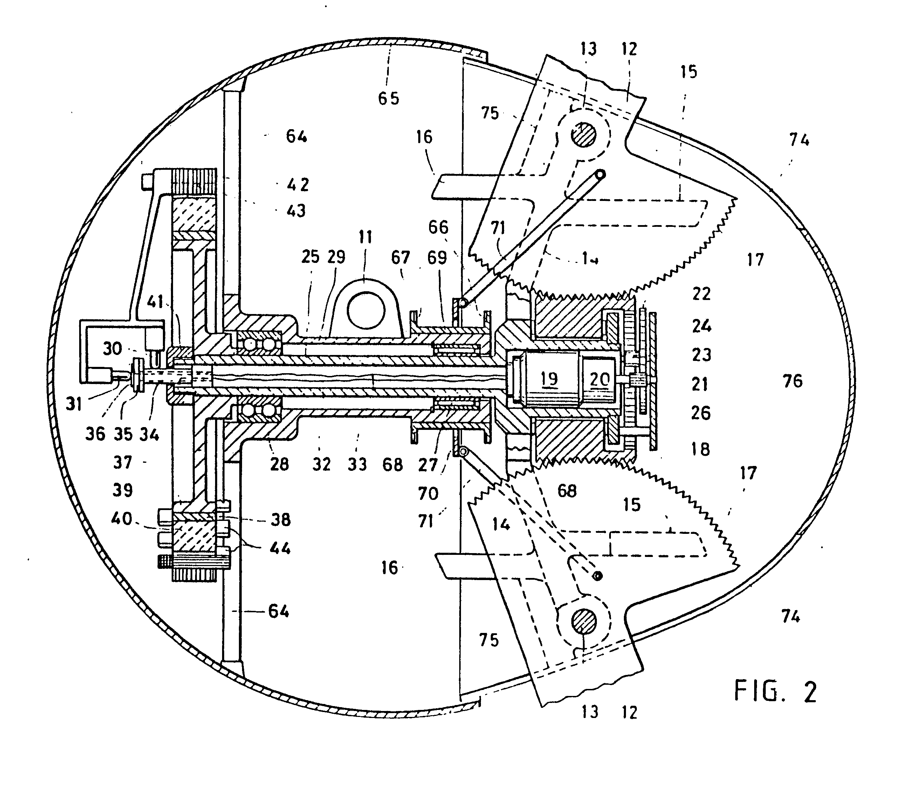

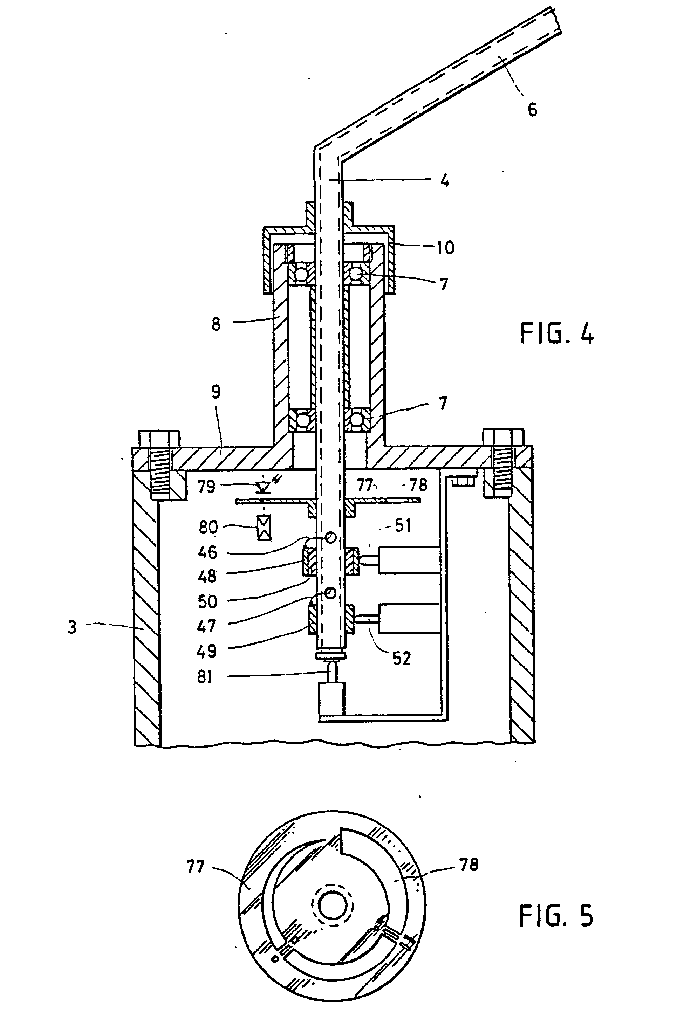

Im dargestellten Ausführungsbeispiel ist der Generator mit Windradantrieb 1 an einem Tragrohr 2 aufgehängt, das auf einem Segelschiffsmast 3 montiert ist (Fig. 1). Das Tragrohr 2 ist zweimal abgewinkelt. Dieses Rohr weist einen ersten, in der Verlängerung des Masts 3 liegenden Endabschnitt 4, einen zweiten, senkrecht auf dem Abschnitt 4 stehenden, aber gegenüber diesem versetzten Endabschnitt 5, und einen mittleren, die Abschnitte 4 und 5 miteinander verbindenden, schief dazu liegenden Abschnitt 6 auf. Der Rohrabschnitt 4 ist mittels eines Kugellagerpaars 7 in einem rohrförmigen Ansatz 8 frei drehbar gelagert, der aus einem Stück mit einem am Mast 3 befestigten Flansch 9 besteht (Fig. 4). Eine auf dem Abschnitt 4 festsitzende Kappe 10 verhindert das Eindringen von Regen. Der Rohrabschnitt 5 tritt durch ein über dem Schwerpunkt des Generators liegendes Öhrenpaar 11 (Fig. 2) hindurch, sodaß der Generator mit Windradantrieb 1 um den Abschnitt 5 frei schwenkbar ist.

Dank der beschriebenen Aufhängung kann die Längsachse des Generators mit Windradantrieb 1 jede Richtung einnehmen, sodaß letzterer quasi kardanisch gelagert ist.

Selbstverständlich könnte der Flansch 9 ebensogut am Ende eines im festen Boden verankerten Masts oder Ständers befestigt sein.

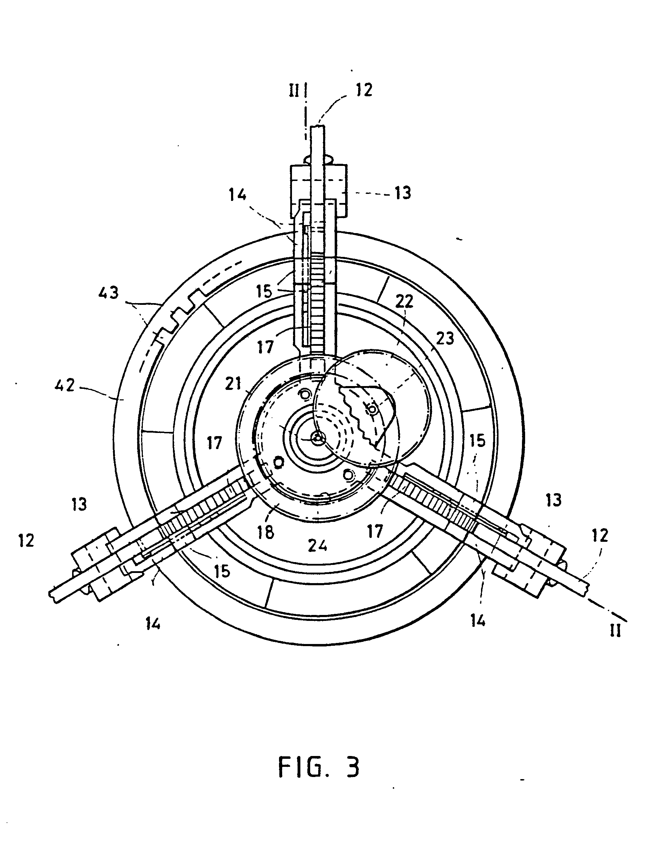

Das Windrad besitzt drei Flügel 12 (Fig. 2, 3), die je um einen Bolzen 13 frei schwenkbar und zwischen Armenpaare 14, 15, 16 gehalten sind. Das innere Ende jedes Flügels ist als sich über rund 90° erstreckendes Schneckenradsegment 17 ausgebildet, das mit einer dreigängigen Schnecke 18 im Eingriff ist. Ein in beiden Drehsinnen rotierbarer Gleichstrommotor 19 mit Reduktionsgetriebe 20 treibt das Schneckenrad 18 über eine Zahnraduntersetzung an, indem ein auf der vom Reduktionsgetriebe 20 austretenden Welle sitzendes Ritzel 21 mit einem Rad 22, und ein mit dem Rad 22 festverbundenes Ritzel 23 mit einer inneren Verzahnung 24 des Schneckenrades 18 kämmt. Dank der starken, zwischen dem Motor 19 und den Segmenten 17 vorgesehenen Untersetzung mag ein verhältnismäßig schwacher aber schnell rotierender Motor den Widerstand der Flügel überwinden und sie in der jeweils eingestellten Lage festhalten. Unter den beschriebenen Umständen bewegt der Motor 19 die Flügel 12 nur langsam.

Der Motor 19 sitzt in einer erweiterten, an einem Ende einer Hohlwelle 25 ausgesparten Ausnehmung 26 fest. Die Welle 25 besteht aus einem Stück mit den Armen 14, 15, 16. Sie ist mittels eines Nadellagers 27 und eines Schrägkugellagers 28 in einem feststehenden Hohlständer 29 frei drehbar gelagert. Kontakte 30, 31 führen Strom zum Motor 19 über Leitungen 32, 33. Während Leitung 32 an der Masse eines in die Hohlwelle 25 eingepreßten, mit dem Kontakt 30 in Berührung stehenden Endstücks 34 angeschlossen ist, tritt das Ende der Leitung 33 durch eine Isolierscheibe 35 hindurch und ist mit einem mit dem Kontakt 31 in Berührung stehenden Plättchen 36 aus Gold oder mit Goldbeschichtung verbunden.

Der Rotor 37 des Generators sitzt auf dem dem Motor 19 gegenüberliegenden Ende der Welle 25 fest. Ein Weicheisenring 38 umgibt seine Felge 39. Ferner sitzt ein aus einer Mehrzahl von Segmenten bestehender Ring 40 aus einem keramischen Material mit hohem Koerzitivvermögen auf dem Ring 38 fest. Der Ring 40 ist in radialer Richtung derart magnetisiert, daß eine Mehrzahl von Polpaaren an seinem Umfang entstehen. Eine auf der Welle 25 aufgeschraubte Mutter 41 sichert den Rotor 37 in seiner Axiallage.

Der Stator des Generators weist einen Weicheisenkern 42 auf, der aus einem Stapel von Blechringen besteht. Axiale Nuten 43 sind in der inneren Seitenfläche des Kerns 42 zur Aufnahme einer Haupt- und einer Meßwicklung ausgestanzt, wobei diese zwei Wicklungen 44 nebeneinander im Zickzack laufen. Beim Drehen induziert somit der Rotor 37 in den zwei Statorwicklungen 44 Wechselspannungen, die mit der Drehgeschwindigkeit des Rotors 37 zunehmen.

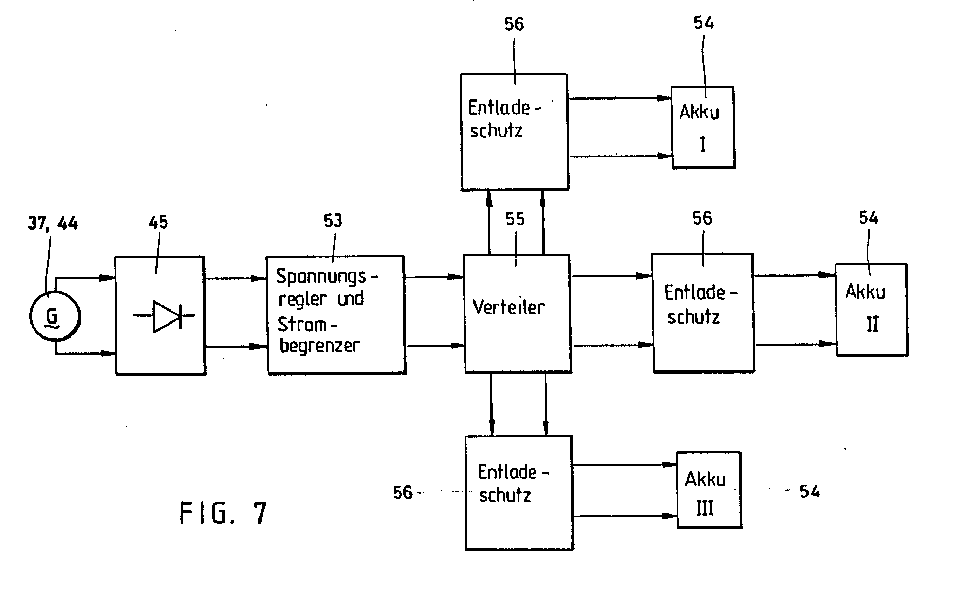

Die Klemmen der Hauptstatorwicklung sind mit dem Eingang eines Gleichrichters 45 (Fig. 7) verbunden. Durch das Tragrohr 2 geführte Leitungen 46 bzw. 47 (Fig. 4) verbinden die positive bzw. die negative Ausgangsklemme des Gleichrichters 45 mit den Muffen 48 bzw. 49, die beim unteren Ende des Rohrabschnitts 4 auf diesem festsitzen. Eine weitere Muffe 50 isoliert die Muffe 48. Von dort an wird der Strom über die Kollektoren 51, 52 und nicht dargestellte Leitungen in das Schiff zu einem Spannungsregler und Strombegrenzer 53 heruntergeführt, durch welchen sukzessiv drei Akkumulatoren 54 über einen Verteiler 55 und je einen Entladeschutz 56 geladen werden (Fig. 7).

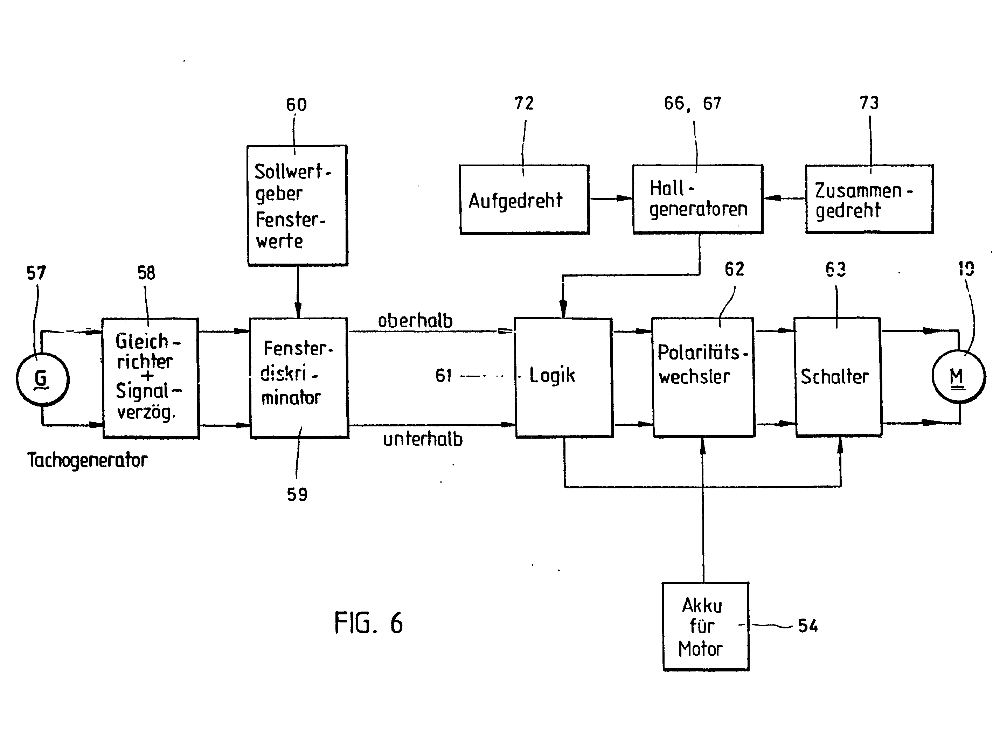

Die Meßwicklung des Stators arbeitet als Tachogenerator 57 (Fig. 6). Die in dieser Wicklung beim drehenden Rotor induzierte Wechselspannung gilt als Maß für die Drehgeschwindigkeit des Rotors. Der vom Ausgang eines Gleichrichters mit Signalverzögerung 58 fließende Strom wird dann einem Fensterdiskriminator 59 zugeführt. Solange die Spannung dieses Stroms zwischen einem unteren und einem oberen, durch einen Sollwertgeber 60 beliebig einstellbaren Sollwerte, d h. solange die betreffende Spannung innerhalb der eingestellten "Fensterwerte" bleibt, reagiert der Diskriminator 59 nicht. Wird aber diese Spannung höher als der obere Sollwert, weil der Rotor 37 und infolgedessen das Windrad zu schnell rotieren, so erteilt der Fensterdiskriminator 59 einer Logik 61 ein Signal "oberhalb". Umgekehrt, wenn die genannte Spannung tiefer ist als der untere Sollwert des Diskriminators 59, weil das Windrad zu langsam umläuft, erteilt der Diskriminator 59 der Logik 61 ein Signal "unterhalb".

Entsprechend dem eingehenden Signal beeinflußt die Logik 61 einen Polaritätswechsler 62. Beim Eintreffen eines Signals schließt sie auch normalerweise einen Schalter 63, sodaß der Motor 19 durch einen der Akkumulatoren 54 über den Polaritätswechsler 62 und den Schalter 63 gespiesen wird und im erforderlichen Sinne umzudrehen beginnt.

Mit anderen Worten bewirkt die in Fig. 6 dargestellte, in der an Speichen 64 des Hohlständers 29 befestigten Schalenhälfte 65 des Generators untergebrachte Schaltung, daß der Motor 19 die Windradflügel 12 spreizt, falls der Wind zu schwach ist, und daß der Motor 19 die Windradflügel 12 zusammenzieht, falls der Wind zu stark wird.

Damit der Motor 19 nicht eingeschaltet wird, wenn die Windradflügel 12 bei Windstille schon voll ausgespreizt sind, oder wenn sie bei einem einsetzenden Sturm bereits ganz zusammengezogen wurden, liegt die Logik 61 unter der Wirkung von Hallgeneratoren mit Magneten 66, 67 (siehe auch Fig. 2). Diese Generatoren sind auf den Flanschen 68 einer auf dem Hohlständer 29 befestigten Bride 69 angeordnet. Um diese Bride ist eine ringförmige Scheibe 70 aus Eisen vorgesehen, die über angelenkte Arme 71 mit den Windradflügeln 12 gekuppelt ist. Die Arme 71 ziehen die Scheibe 72 bis in unmittelbare Nähe des auf dem in Fig. 2 rechten Flansch 68 der Bride 69 angeordneten Hallgenerators 66, bzw. stoßen sie bis in unmittelbare Nähe des auf dem linken Flansch 68 dieser Bride angeordneten Hallgenerators 67, wenn sie voll ausgespreizt, bzw. ganz zusammengezogen werden. Im ersten Fall bekommt der entsprechende, induktiv beeinflußte Hallgenerator vom Schaltelement 72 ein Signal "aufgedreht" und im zweiten Fall bekommt der entsprechende Hallgenerator vom Schaltelement 73 das Signal "zusammengedreht". In diesen Fällen sperren die Hallgeneratoren die Logik 61, sodaß der Schalter 63 nicht betätigt wird.

Eine mit Schlitzen 74 für die Windradflügel 12 versehene, an Fortsätzen 75 der Arme 14 befestigte, daher mit dem Windrad umlaufende Schalenhälfte 76 bildet zusammen mit der festliegenden Schalenhälfte 65 eine komplette Verschalung des beschriebenen Generators mit Windrad 1. Da dieser sich automatisch in die Windrichtung einstellt, wird noch eine weitere Information daraus gezogen. Zu diesem Zweck sitzt eine scheibenförmige Blende 77 auf dem Rohrabschnitt 4 fest (Fig. 4) Eine Öffnung 78 zunehmender Breite ist in der Blende 77 ausgesetzt. An fester Stelle gegenüber dem Mast 3 ist über der Öffnung 78 eine Leuchtdiode 79 und unter der Öffnung 78, gegenüber der Diode 79 eine Photozelle 80 angeordnet. Je nach der Winkellage der Scheibe 77 empfängt die Photozelle 80 mehr oder weniger Licht von der Diode 79. Die somit in Abhängigkeit von der Windrichtung durch die Photozelle empfangene Information kann auf Wunsch beispielsweise einem Anzeiger im Schiff zugeführt werden und/oder eine automatische Schiffssteuerung ermöglichen.

Sollte die automatische Windradflügelschwenkung aus irgend einem Grund versagen, so könnte sie von Wand gesichert werden. Zu diesem Zweck kann je nach der gewünschten Schwenkrichtung der Windradflügel 12 der positive oder der negative Pol einer der Akkumulatoren 54 über eine isolierte (nicht dargestellte) Leitung mit dem Kontakt 81 verbunden werden, der selber mit dem Kontakt 31 über eine durch das Tragrohr 2 geführte (nicht dargestellte) Leitung verbunden ist, und so den Motor 19 starten.

**Patentansprüche**

1. Generator mit Windradantrieb, bei welchem die Windradflügel gemeinsam und kontinuierlich zusammenklappbar und spreizbar sind,
dadurch gekennzeichnet,
- daß zwecks Verstellung und Festlegung der Windradflügel (12) eine durch einen Motor (19) unter starker Untersetzung antreibbare Schnecke (18) mit einem Scheckenradsegment (17) jedes Windradflügels (12) selbsthemmend kämmt,
- daß eine auf die Drehgeschwindigleit des Windrads empfindliche Vorrichtung (57) den Motor (19) einschaltet, wenn die Drehgeschwindigkeit des Windrads außerhalb festgesetzter Grenzen liegt und diesen Motor nur solange in Betrieb hällt, bis die betreffende Geschwindigkeit wieder zwischen die genannten Grenzen zu liegen kommt, oder bis die Windradflügel (12) eine ihrer Endlagen erreichen,
- daß der Generator einen vielpolig permanent magnetisierten, auf der Windradwelle (25) festsitzenden Rotor (37) besitzt
- und daß die Aufhängung des Generators der Achse der Windradwelle (25) gestattet, jede beliebige Richtung frei einzunehmen.
2. Generator nach Anspruch 1,
dadurch gekennzeichnet, daß der genannte Motor (19) mit den Windradflügeln (12) über ein ausschließlich aus rotierenden Elementen bestehendes Getriebe (20 - 23, 18) verbunden ist.
3. Generator nach Anspruch 1 oder 2,
dadurch gekennzeichnet,
daß der genannte Motor (19) in der Windradwelle (25) untergebracht ist.
4. Generator nach Anspruch 1, 2 oder 3,
dadurch gekennzeichnet,
daß die genannte Vorrichtung (57) den Motor (19) durch eine separate Wicklung des Generators über folgende, in Serie geschaltete Elemente steuert: ein Gleichrichter mit Signalverzögerung (58), ein mit Sollwerten versehener Fensterdiskriminator (59), eine unter dem Einfluß von Hallgeneratoren (66, 67) liegende Logik (61), ein Polaritätswechsler (62) für die Energiezufuhr zum Motor (19) und ein von der Logik gesteuerter Schalter (63).
5. Generator nach Anspruch 1, 2, 3 oder 4,
dadurch gekennzeichnet,
daß sein Rotor (37) zwei ineinanderliegende Ringe (40, 38) aufweist, von denen der äußere (40) aus hochkoerzitiven, vielpolig radial magnetisierten Keramiksegmenten zusammengesetzt ist und der innere (38) aus Eisen besteht und dem Rückschluß dient.
6. Generator nach einem der vorangehenden Ansprüche,
dadurch gekennzeichnet,
daß sein Windrad drei Flügel (12) besitzt.
7. Generator nach Anspruch 6,
dadurch gekennzeichnet,
daß er quasi kardanisch mittels eines zweimal abgewinkelten Tragrohrs (2) gelagert ist, das zwei senkrecht aufeinander stehende, aber gegeneinander versetzte Endabschnitte (4, 5) und einen diese Endabschnitte miteinander verbindenden, schief dazu liegenden, mittleren Abschnitt (6) aufweist, wobei der eine (4) dieser Endabschnitte in der Verlängerung eines Segelschiffsmasts (3) um seine Längsachse frei drehbar gelagert, und die gemeinsame Welle (25) des Rotors (37) und des Windrads um den anderen Endabschnitt (5) des Tragrohrs (2) frei schwenkbar ist.
8. Generator nach Anspruch 7,
dadurch gekennzeichnet,
daß eine Information durch eine Photozelle (80) geliefert wird, zu welcher eine am Endabschnitt (4) des Tragrohrs (2) in der Verlängerung des Masts (3) befestigte Blende (77) je nach deren Orientierung mehr oder weniger Licht von einer Lichtquelle (79) hindurchläßt.

**Claims**

1. Windmill-driven generator whose impeller blades can be retracted and extended concurrently and continuously,
characterized by the fact:
- that a worm (18) with a worm wheel segment (17), driven by a motor (19) with strong gear reduction, engages selflocking with each impeller blade (12) for the purpose of adjusting and fixing the impeller blade (12);

- that a device (57) sensitive to the rotational speed of the millwheel switches the motor (19) on when the rotational speed of the millwheel is outside set limits, and only keeps this motor operating until the respective speed once again comes within the set range or until the impeller blades (12) reach one of their end positions;

- that the generator has a permanently magnetized, four-pole rotor (37) tightly fixed on the windmill shaft (25);

- and that the suspension of the generator permits the axis of the millwheel shaft (25) to freely adopt any desired direction.

2. Generator according to claim 1, characterized by the fact

that the named motor (19) is connected with the impeller blades (12) by means of a gearing consisting exclusively of rotating elements (20 - 23, 18).

3. Generator according to claim 1 or 2, characterized by the fact

that the named motor (19) is mounted in the millwheel shaft (25).

4. Generator according to claim 1, 2 or 3, characterized by the fact that

the named device (57) controls the motor (19) by means of a separate winding of the generator through the following elements switched in series: a rectifier with signal delay (58), a window discriminator (59) provided with set-point values, a logic (61) subject to the influence of Hall generators (66, 67) a polarity changer (62) for the supply of power to the motor (19), and a switch (63) controlled by the logic.

5. Generator according to claim 1, 2, 3 and 4, characterized by the fact

that its rotor (37) has two rings one within the other (40, 38), the outer ring (40) of which is composed of high coercive, multi-pole radial magnetized ceramic segments and the inner ring (38) of which is made of iron and serves the yoke.

6. Generator according to one of the aforementioned claims

characterized by the fact

that its millwheel possesses three blades (12).

7. Generator according to claim 6, characterized by the fact

that it is more or less cardanically pivoted by means of a double angled bracing tube (2) which has two vertically superposed, but staggered, end sections (4, 5) and a center section (6) joining these end sections but at an oblique angle to them, whereby one (4) of these end sections rotates freely around its longitudinal axis in the extension of a sailing ship mast and the common shaft (25) of the rotor (37) and the millwheel is freely sluable around the other end section (5) of the bracing tube (2).

8. Generator according to claim 7, characterized by the fact

that data is supplied by a photoelectric cell (80), to which a diaphragm (77), fastened on the end section (4) of the bracing tube (2) in the extension of the mast (3), allows more or less light from a light source (79) to reach, depending on its orientation.

## Revendications

1. Générateur à éolienne, dont les pales peuvent être repliées et écartées conjointement et continuellement,
caractérisé par le fait

- qu'en vue du positionnement et du maintien des pales (12), une vis sans fin (18) susceptible d'être entraînée par un moteur (19) avec une grande démultiplication, s'engrène avec blocage automatique avec un segment de roue-vis (17) de chaque pale (12),

- qu'un dispositif (57) sensible à la vitesse de rotation de la roue éolienne met le moteur (19) en marche lorsque la vitesse de rotation de la roue éolienne se situe en-dehors de limites définies, et maintient ce moteur en service jusqu'à ce que la vitesse concernée revienne entre les limites mentionnées, ou jusqu'à ce que les pales (12) aient atteint l'une de leurs positions extrêmes,

- que le générateur possède un rotor (37) magnétisé en permanence par plusieurs pôles, qui est fixé sur l'arbre (25) de la roue éolienne,

- et que la suspension du générateur permet à l'axe de l'arbre (25) de la roue éolienne de prendre librement n'importe quelle direction.

2. Générateur selon la revendication 1 caractérisé par le fait

que le moteur (19) précité est connecté avec les pales (12) par un engrenage (20 - 23, 18) composé exclusivement d'éléments rotatifs.

3. Générateurs selon la revendication 1 ou 2, caractérisé par le fait

que le moteur (19) précité est installé dans l'arbre (25) de la roue éolienne.

4. Générateur selon la revendication 1, 2 ou 3, caractérisé par le fait

que le dispositif (57) précité commande le moteur (19) par une bobine séparée du générateur, par l'intermédiaire des éléments suivants montés en série: un redresseur à retardement de signal (58), un discriminateur à fenêtre (59) doté de valeurs de consigne, une logique (61) subordonnée à des générateurs Hall (66, 67), un inverseur de polarité (62) pour l'apport d'énergie au moteur (19) et un commutateur (63) commandé par la logique.

5. Générateur selon la revendication 1, 2, 3 ou 4, caractérisé par le fait

que son rotor (37) présente deux anneaux emboîtés l'un dans l'autre (40, 38), l'anneau extérieur (40) étant composé de segments en céramique hautement coercitifs et magnétisés radialement par plusieurs poles, et l'anneau intérieur (38) étant en fer et servant au retour.

6. Générateur selon l'une des revendications ci-dessus,

caractérisé par le fait
que sa rou€ éolienne possède trois pales (12).
7. Générateur selon la revendication 6,
caractérisé par le fait
qu'il est logé quasiment à la cardan au moyen d'un tube porteur (2) coudé deux fois, qui présente deux sections finales (4, 5) placées à la verticale d'une de l'autre, mais décalées l'une par rapport à l'autre, et une section médiane (6) qui relie entre elles ces sections finales et est oblique par rapport à elle, l'une (4) de ces sections finales étant logée dans le prolongement d'un mât de bateau (3) et pouvant tourner librement autour de son axe longitudinal, et l'arbre (25) commun du rotor (37) et de la roue éolienne pouvant pivoter librement autour de l'autre section finale (5) du tube porteur (2).

8. Générateur selon la revendication 7 caractérisé par le fait
qu'une information est fournie par une cellule photoélectrique (80), pour laquelle un diaphragme (77) fixé sur la section finale (4) du tube porteur (2) dans le prolongement du mât (3) laisse, selon son orientation, passer plus ou moins de lumière provenant d'une source lumineuse (79).

FIG. 1

FIG. 2

FIG. 3

FIG. 4

FIG. 5

FIG. 6

0 165 894

FIG. 7